Europäisches Patentamt

(19) European Patent Office

Office européen des brevets

(11) **EP 0 823 858 B1**

(12) **EUROPEAN PATENT SPECIFICATION**

(45) Date of publication and mention
of the grant of the patent:
**12.09.2001 Bulletin 2001/37**

(51) Int Cl.[7]: **B01D 19/04**, C11D 3/00

(86) International application number:
**PCT/GB96/01024**

(21) Application number: **96912114.4**

(22) Date of filing: **29.04.1996**

(87) International publication number:
**WO 96/34671 (07.11.1996 Gazette 1996/49)**

(54) **ANTI-FOAM MATERIAL**

SCHAUMBEKÄMPFUNGSMITTEL

MATERIAU ANTI-MOUSSE

(84) Designated Contracting States:
**BE CH DE DK ES FR GB IE IT LI NL SE**

(30) Priority: **04.05.1995 GB 9509114**

(43) Date of publication of application:
**18.02.1998 Bulletin 1998/08**

(73) Proprietor: **COLIN STEWART MINCHEM LTD.
Winsford, Cheshire CW7 3BU (GB)**

(72) Inventors:
• **STUART, David, Peter
Northwich, Cheshire CW8 2SG (GB)**

• **SNOOKES, Ian, Patrick
Runcorn, Cheshire WA7 2DS (GB)**

(74) Representative: **Bannerman, David Gardner et al
Withers & Rogers,
Goldings House,
2 Hays Lane
London SE1 2HW (GB)**

(56) References cited:
**EP-A- 0 206 522          EP-A- 0 210 731
EP-A- 0 496 510          EP-A- 0 517 298**

**Description**

This invention relates to granular materials and more especially to a particulate, granular anti-foam material for use in powdered or granular detergent compositions.

Granular materials for a wide range of purposes are often prepared from an absorbent carrier material and a liquid. However, it is difficult to produce granules of adequate strength and if the granules disintegrate they tend to cake, and they may also cause caking of any other particulate material to which they may be added.

Silicone anti-foam agents are widely used, but when incorporated into anti-foam materials, their performance tends to deteriorate on prolonged storage. Attempts to overcome this have included encapsulating the silicone anti-foam agent by the addition of an organic alcohol or wax, but these proposals have not always proved satisfactory.

EP-A-0517298, EP-A-0496510, EP-A-0210731 and EP-A-0206522 disclose or suggest powdered detergents comprising anti-foam particles and detergent particles, the latter optionally comprising soluble alkali silicate salts as builders.

According to the present invention, we provide an anti-foam granule comprising a carrier, a silicone anti-foam agent, a fatty acid ester of a polyhydric alcohol and a soluble silicate.

Preferably the anti-foam granules are for detergent compositions.

The anti-foam granule includes a fatty acid ester of a polyhydric alcohol in order to overcome the problem of deterioration of the anti-foam material on storage, and a soluble silicate to increase granule strength. The granules may be provided with a surface coating of aluminosilicate dust.

The silicone anti-foam agent may be one of those conventionally used in detergent compositions.

The fatty acid ester combats the problem of deterioration in the performance of the anti-foam material on storage. The ester acts as a form of encapsulant this leading to a granule with lower susceptibility to degradation by surfactant.

The fatty acid component of the ester is preferably unsaturated. A $C_{10}$ to $C_{26}$ unsaturated fatty acid is preferably used. Oleic acid ($C_{18}$) is especially preferred. The polyhydric alcohol is preferably a triol, more preferably sorbitol.

The ester is preferably liquid at ambient temperature. It preferably has an HLB value of 2-7, more preferably 4-5.

A particularly preferred ester is sorbitan monooleate which has an HLB value within the range mentioned in the preceding sentence.

A wide range of absorbent carrier materials may be used. Inorganic materials include zeolites, such as zeolite A, and organic materials include cellulose-based products such as corn husk powder. The silicate preferably has a ratio of 1.5 to 2.5 and may be sodium disilicate.

We have found, surprisingly, that addition of soluble silicate increases significantly the strength and hardness of the granules, enabling the proportion of carrier to be reduced. This is particularly important where the active component in the granules is comprised by a liquid. There is a preferred optimum soluble silicate addition level is about 1-25% by weight of the final composition, especially 8-14% by weight which is required to produce a granule that does not cake yet disperses readily. Too much soluble silicate reduces dispersion, too little soluble silicate produces a granule which cakes. Also the soluble silicate level must be balanced to produce a granule which has a low attrition rate on handling. Too little soluble silicate can result in a granule which easily degrades on handling. The optimum concentration of soluble silicate may vary according to the amount of silicone anti-foam and ester used.

Preferably, the anti-foam granule contains from 40 to 80% by weight of the aluminosilicate, more preferably about 60%. The aluminosilicate is preferably bentonite or a zeolite, for example zeolite A. The anti-foam granule preferably contains roughly similar proportions of the silicone anti-foam agent and the fatty acid ester. Each of these may be either independently or dependently present in an amount of from 3 to 18% by weight of the whole composition. Each of these two components may, for example be present in an amount of 7% to 11% by weight of the antifoam granule and 7 to 11% by weight of the fatty acid ester, although it may be advantageous to reduce the percentage of fatty acid ester somewhat. Preferably both the silicone anti-foam agent and fatty acid ester are each present in an amount of about 10% by weight.

The aluminosilicate dust applied as a coating to the granules is preferably a zeolite, e.g. zeolite A and is preferably present in an amount of from 3 to 16% by weight of the anti-foam material, more preferably about 10% by weight.

The ester and the silicone anti-foam agent may be mixed together prior to addition of the carrier (e.g. zeolites or alternatively the ester may be absorbed onto the zeolite or other carrier prior to addition of the silicone anti-foam agent.

The invention also includes detergent compositions containing anti-foam granules according to the invention, especially those for use in front loading washing machines.

The invention also provides a method of preparing anti-foam granules as described above for detergent compositions comprising the steps of:

mixing a fatty acid ester of a polyhydric alcohol with a silicone anti-foam agent;

mixing the mixture produced with a carrier, preferably in a high shear mixer such as a KM mixer;

mixing the carrier containing mixture with a soluble silicate in preferably a high shear granulator; and

drying the final product using, for example, a fluid bed dryer.

Alternatively the ester may be blended with carrier prior to adding silicone and mixing in a high shear mixer. The soluble silicate is then added and the product dried as above.

The invention will now be described by way of example with reference to the following figures:

Fig. 1 shows the effect of adding the anti-foam granules according to the invention to a first detergent composition (■ with anti-foam material, ◇ without anti-foam material).

Fig. 2 shows the effect of adding the anti-foam granules according to the invention to a second detergent composition (■ with anti-foam material, ◇ without anti-foam material).

Fig. 3 shows the effect of components of the anti-foam granules on a suds profile for fresh products (◆ no ester, □ no silicate, ▲ no ester or soluble silicate, ◇ anti-foams according to the invention).

Fig. 4 shows the effect of components of the anti-foam granules of the suds profile of artificially aged product (◆ no ester, □ no silicate, ▲ no ester or soluble silicate, ◇ anti-foams according to the invention).

## EXAMPLES

Example 1

### Preparation of anti-foam granules

Several batches were made up to form a total premix 5125 grams in weight.

Initially, 62.5 grams of silicone anti-foam (TP 331) and 62.5 grams of sorbitan monooleate (Crill 4) were blended together and the resulting mix was blended with 500 grams of zeolite. This was transferred to a mixer and 784 grams of sodium silicate solution C125 (preheated to approximately 120°C), was sprayed onto the premix via a peristaltic pump and spray nozzle.

The resulting granules were pale yellow in colour, exhibited good granule strength, but had a slight tendency to cake, similar to brown sugar.

98% of the granules would pass through a 10 mesh sieve.

Approximately 3 Kg of the above mixture was sieved at 10 mesh and sprinkled into a fluid bed drier. The granules were dried for approximately 10 minutes at 80°C. During drying the granular strength diminished until the granules disintegrated when touched. Subsequently therefore a further batch of approximately 2 Kg of the original pale yellow granules were sieved at 10 mesh and dried at 30°C for ten minutes, then at 40°C for a further 15 minutes. Granule strength was better retained in this instance.

It was noted that the material that had been dried at the higher temperature tended to cake more.

The products of both drying experiments were mixed together and dusted with 0.54 Kg of zeolite dust.

A new formulation was made up, as follows:

Zeolite 4000 grams (65%)

TP 331 silicone anti-foam 500 grams (8.2%)

Sorbitan monooleate (Crill 4) 500 grams (8.2%)

Sodium silicate solution (C125) 784 grams (13%)

Zeoiite dust (for surface coating) 350 grams (5.6%).

After coating with the zeolite dust and drying the granules were found to be free-flowing and quite strong. The particle size distribution was found to be as follows:

| + 10 mesh (1.7mm) | + 14 mesh (1.18mm) |
|---|---|
| 0.0 | 16.0 |

| + 22 mesh (710μ) | + 36 mesh (425μ) |
|---|---|
| 53.7 | 87.1 |

| + 60 mesh (250μ) | + 100 mesh (150μ) | - 100 mesh |
|---|---|---|
| 97.8 | 99.7 | 0.3 |

P = 0.476g cm$^{-3}$
Mean particle size - 730$\mu$

This particle size distribution was found to be ideal for incorporation into a powdered detergent composition, where the size of the particles is generally in the range of 0.5 to 1.5mm.

Example 2

The effect of silicate on cake strength

The cake strength of the anti-foam granules made according to Example 1 was compared to an anti-foam material made in the same way but with the silicate omitted.

The test method uses a fixed volume of agglomerate which has been compressed into a free standing cylindrical cake. The force needed to collapse this cake is measured on a force gauge driven into the cake. The force required to collapse the cake is a measure of the potential for the agglomerate to form cakes during preparation or on storage.

Approximately 200g of representative sample was placed into a hollow cylinder and a solid cylinder was placed inside the hollow cylinder on top of the sample. A 10kg weight was applied and left for 2 minutes. Carefully the weight, the cylinder and the hollow cylinder were removed from the sample, leaving a cake of the agglomerate. A force gauge was then driven into the cake until it collapsed. The force in kg required to break the cake was noted.

Table 1 shows the cake strength of the anti-foam agent with and without silicate expressed in kg force.

TABLE 1

| WITH SILICATE | WITHOUT SILICATE |
|:---:|:---:|
| 0 | 1.91 |

Example 3

The effect of adding anti-foam granules

The effect of adding the anti-foam granules made according to the example was tested using the two detergent compositions shown in Table 2.

TABLE 2

| DETERGENT FORMULATION | | |
|---|:---:|:---:|
| | 1 | 2 |
| **SURFACTANTS** | | |
| Linear alkyl benzene sulphonate | 8 | 8 |
| $C_{14}$ fatty acid-7 ethoxylate groups | 2 | 5 |
| $C_{14}$ fatty acid-Alkylsulphate | 3 | 3 |
| **BUILDERS** | | |
| STPP Sodium tripolyphosphate | 30 | |
| Zeolite A | | 25 |
| Polyacrylic-acid | | 5 |
| **BLEACH** | | |
| Perboratemonohydrate | 15 | 15 |
| TAED | 3 | 3 |
| **ENZYMES** | | |
| Enzymes (Savinase) | 0.5 | 0.5 |
| **BUFFER** | | |
| Na2CO3 | 15 | 11 |
| Silicate | 5 | 6 |

TABLE 2 (continued)

| DETERGENT FORMULATION | | |
|---|---|---|
| | 1 | 2 |
| **SUDS SUPPRESSANT** | | |
| **ANTI-REDEPOSITION AGENT / CHELANT** | | |
| Carboxymethylcellulose | 0.5 | 0.5 |
| EDTA | 2 | 2 |
| Phosphonate | 0.6 | 0.6 |
| **FABRIC SOFTENER** | | |
| Bentonite | 15 | 15 |
| **MISCELLANEOUS** | | |
| Brightener | 0.2 | 0.2 |
| Perfume | 0.2 | 0.2 |

The principle behind the test used is to see how the anti-foam granules controls suds during a washing machine cycle. A standard wash cycle is used and the height of the suds viewed through the washing machine window is plotted against time.

76g of test material (detergent +/- suds suppressor) was placed into the washing powder dispenser of a Miele Novotronic™ W820 washing machine. The program was set to cotton wash and the temperature set to 40°C. The suds level was noted at intervals of time and the sud levels graded on a scale of 1 to 6, with 6 indicating a full window on the washing machine.

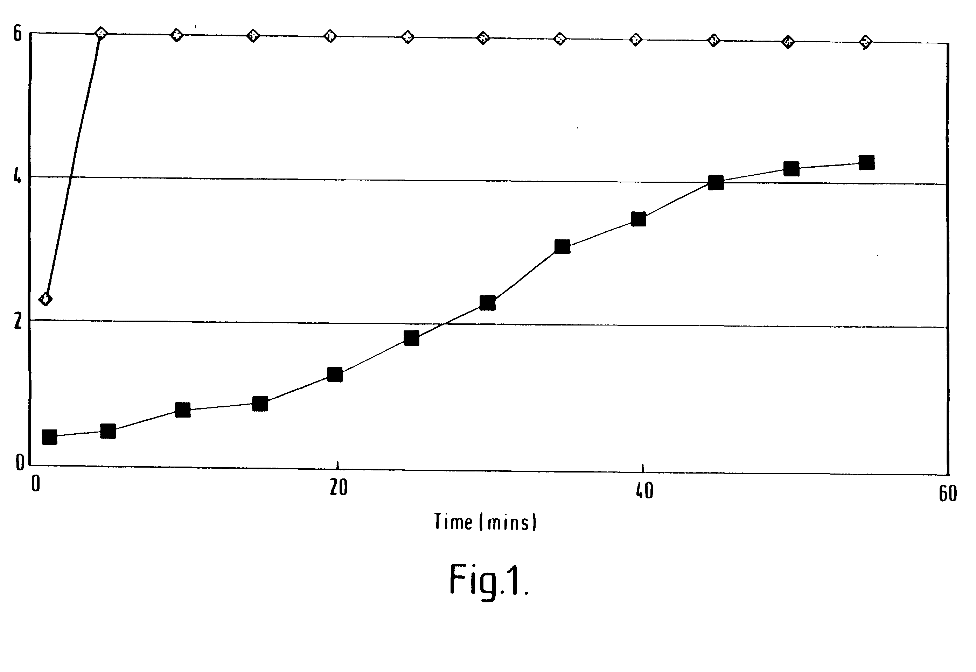

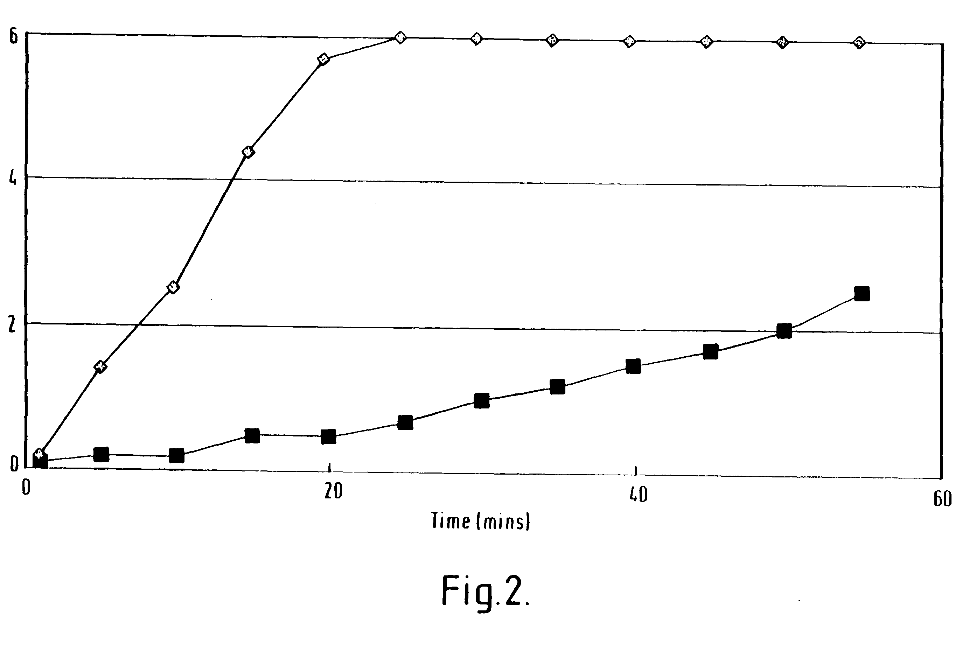

The results are shown in Table 3 and Figs. 1 and 2.

## SUDS PROFILE

### FORMULATION ONE
### FORMULATION TWO

| TIME (mins) | WITH ANTI-FOAM ADDITIVE | NO ANTI-FOAM ADDITIVE | WITH ANTI-FOAM ADDITIVE | NO ANTI-FOAM ADDITIVE |
|---|---|---|---|---|
| 1 | 0.4 | 2.3 | 0.1 | 0.2 |
| 5 | 0.5 | 6.0 | 0.2 | 1.4 |
| 10 | 0.8 | 6.0 | 0.2 | 2.5 |
| 15 | 0.0 | 6.0 | 0.5 | 4.4 |
| 20 | 1.3 | 6.0 | 0.5 | 5.7 |
| 25 | 1.8 | 6.0 | 0.7 | 6.0 |
| 30 | 2.3 | 6.0 | 1.0 | 6.0 |
| 35 | 3.1 | 6.0 | 1.2 | 6.0 |
| 40 | 3.5 | 6.0 | 1.5 | 6.0 |
| 45 | 4.0 | 6.0 | 1.7 | 6.0 |
| 50 | 4.2 | 6.0 | 2.0 | 6.0 |
| 55 | 4.3 | 6.0 | 2.5 | 6.0 |

6 indicates a full window, test abandoned if suds level over 6

TABLE 3

The results clearly show that the anti-foam granules of the invention significantly reduces foaming.

Example 4

The effects of the components of the anti-suds material or suds profile

This was tested using compositions based on Example 1 omitting ester and/or silicate.

The suds profile test of Example 3 was repeated using the following detergent.

TABLE 4

| COMPOUND | Weight % |
|---|---|
| Soda Ash | 23.6 |
| Sodium Sulphate | 35.0 |
| Zeolite | 3.5 |
| Linear Alkyl Benzine Sulphonate | 5.0 |
| Carboxymethyl Cellulose | 0.17 |

76g of detergent was mixed 8g of anti-foam agent and used in a washing machine at 40°C.

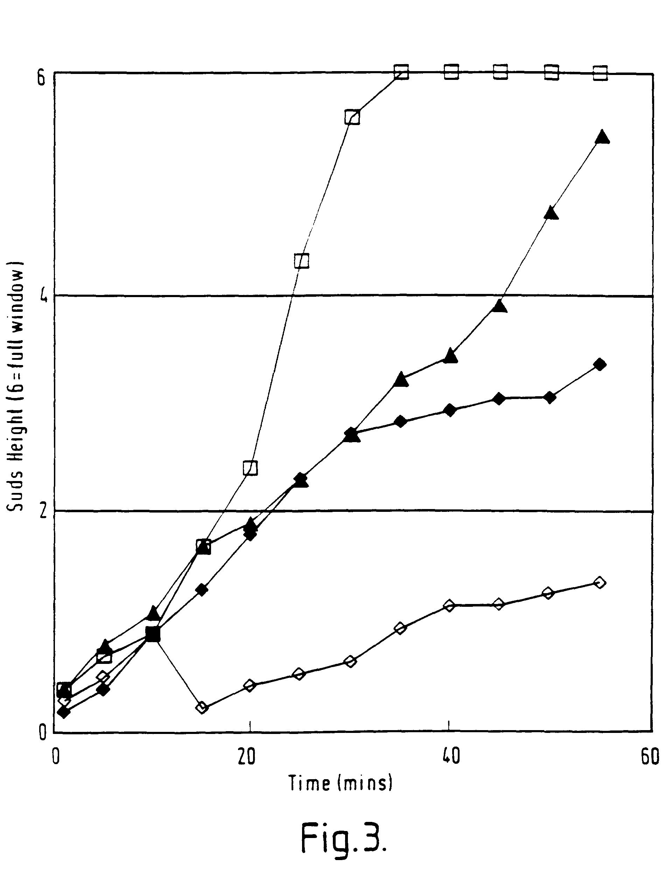

The results are shown in Table 5 and Figure 3.

TABLE 5

**SUDS PROFILE**
**FRESH PRODUCT**

| TIME (mins) | STANDARD | NO ESTER | NO SILICATE | NO ESTER/NO SILICATE |
|---|---|---|---|---|
| 1 | 0.3 | 0.2 | 0.4 | 0.4 |
| 5 | 0.5 | 0.4 | 0.7 | 0.8 |
| 10 | 0.9 | 0.9 | 0.9 | 1.1 |
| 15 | 0.2 | 1.3 | 1.7 | 1.7 |
| 20 | 0.4 | 1.8 | 2.4 | 1.8 |
| 25 | 0.6 | 2.3 | 4.3 | 2.3 |
| 30 | 0.8 | 2.7 | 5.8 | 2.7 |
| 35 | 0.9 | 2.8 | 6.0 | 3.2 |
| 40 | 1.1 | 2.9 | 6.0 | 3.4 |
| 45 | 1.1 | 3.0 | 6.0 | 3.9 |
| 50 | 1.2 | 3.0 | 6.0 | 4.7 |
| 55 | 1.3 | 3.3 | 6.0 | 5.4 |

6 indicates a full window, test abandoned if suds level over 6

8

The results clearly show that the ester and soluble silicate components individually reduce the suds profile obtained, but the greatest effect is obtained when they are used in combination.

Example 5

The effect of the components of the anti-foam granules on aging

The compositions used in Example 4 were artificially aged by boxing in a cardboard box and leaving at room temperature for one week.

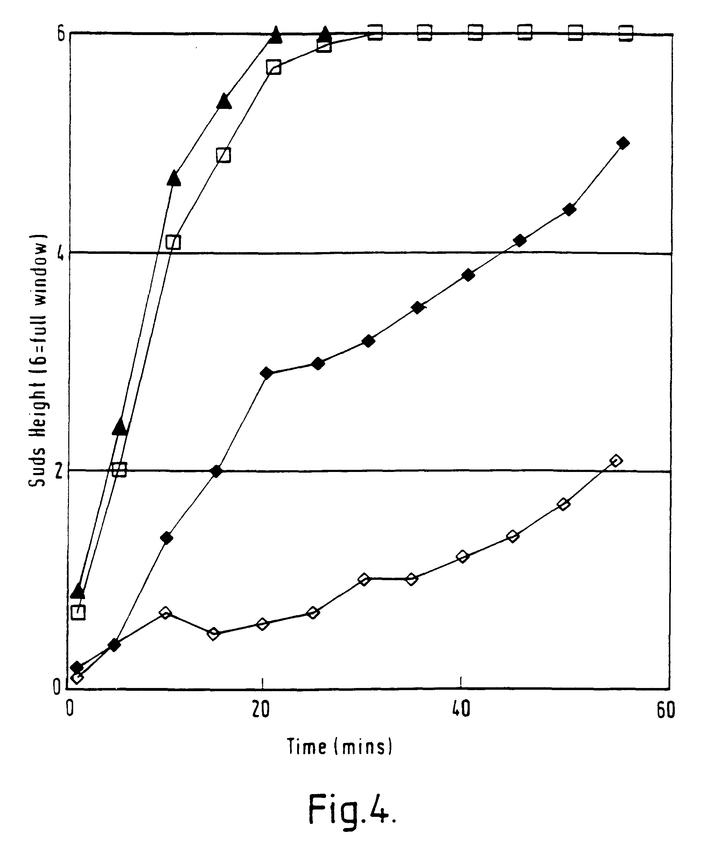

The effects on the aging on of the formulation on the suds profile produced is shown in Table 6 and Fig. 4.

TABLE 6

## SUDS PROFILE
## AGED PRODUCT (1 week)

| TIME (mins) | STANDARD | NO ESTER | NO SILICATE | NO ESTER/NO SILICATE |
|---|---|---|---|---|
| 1 | 0.1 | 0.2 | 0.7 | 0.9 |
| 5 | 0.4 | 0.4 | 2 | 2.4 |
| 10 | 0.7 | 1.4 | 4.1 | 4.7 |
| 15 | 0.5 | 2.0 | 4.9 | 5.4 |
| 20 | 0.6 | 2.9 | 5.7 | 6.0 |
| 25 | 0.7 | 3.0 | 5.9 | 6.0 |
| 30 | 1.0 | 3.2 | 6.0 | 6.0 |
| 35 | 1.0 | 3.5 | 6.0 | 6.0 |
| 40 | 1.2 | 3.8 | 6.0 | 6.0 |
| 45 | 1.4 | 4.1 | 6.0 | 6.0 |
| 50 | 1.7 | 4.4 | 6.0 | 6.0 |
| 55 | 2.1 | 5.0 | 6.0 | 6.0 |

6 indicates a full window, test abandoned if
suds level over 6

The results show that the material with silicate omitted is effected by aging, thus showing that soluble silicate inhibits degradation of the detergent composition.

Example 6

The effect of high silicone content

A premix was made of silicone anti-foam (TP 331), 4.554 Kg and sorbitan monooleate, 4.554 Kg by mixing in a tank. This mix was then blended with the Zeolite A, 28.2 Kg in a high shear mixer. This was then agglomerated with Sodium di-silicate, 6.75 Kg in a high shear mixer and the silicate added by dripping into the mixer.

From the resulting granules 5 Kg were dried in a fluid-bed drier for 45 minutes at 30°C. This resulted in a formulation as follows:

Zeolite 67.05% (28.2 Kg)
TP331 silicone anti-foam 10.83% (4.554 Kg)
Sorbitan monooleate (Crill 4) 10.83% (4.554 Kg)
Sodium disilicate 8.83% (3.71 Kg)
Water balance of 100%
Mean Particle size 720 micron
Density 991.6 g/L

This resulted in a good suds profile using the method of Example 3 with the detergent of Table 4. 4g of anti-foam with 76g of test detergent gave the result as shown in Table

TABLE 7

| Time | Suds height |
|------|-------------|
| 1 | 0.3 |
| 5 | 0.6 |
| 10 | 0.8 |
| 15 | 0.8 |
| 20 | 0.9 |
| 25 | 0.9 |
| 30 | 1.0 |
| 35 | 1.1 |
| 40 | 1.1 |
| 45 | 1.3 |
| 50 | 1.6 |
| 55 | 1.9 |

The results show that high silicone concentrations produce good suds suppression.

Example 7 (Comparative Example)

10g of silicone anti-foam (TP 331 was premixed with 10g of Sorbitan mono-oleate (Crill 4). This was then mixed with 90g of Light Soda Ash. This resulted in slight granulation with good white colour granules. The suds testing following the method of Example 6 and gave the following results using 4g of anti-foam in 76g of test detergent tested at 30 C:

| time | suds height |
|------|-------------|
| 1 | 0.2 |
| 5 | 0.2 |
| 10 | 0.5 |
| 15 | 0.9 |
| 20 | 1.7 |

(continued)

| time | suds height |
|------|-------------|
| 25 | 1.9 |
| 30 | 2.0 |
| 35 | 2.0 |
| 40 | 2.0 |
| 45 | 2.0 |
| 50 | 2.4 |
| 55 | 2.9 |

Example 8 (Comparative Example)

To assess the effect of bentonite as a carrier 10g of anti-foam (TP 331) was mixed with 10g of ethoxy sorbitan mono-oleate (Crillet 4 super). The resulting mixture was then mixed with 90g of bentonite (QPC 300). This resulted in a relatively free flowing powder. 4g of anti-foam in 76g of test detergent tested at 40 C gave the following suds profile:

| time | suds height |
|------|-------------|
| 1 | 0.2 |
| 5 | 0.5 |
| 10 | 0.9 |
| 15 | 1.4 |
| 20 | 2.5 |
| 25 | 3.0 |
| 30 | 3.0 |
| 35 | 3.0 |
| 40 | 3.4 |
| 45 | 3.7 |
| 50 | 3.9 |

**Claims**

1. Anti-foam granule comprising a carrier, a silicone anti-foam agent, a fatty acid ester of a polyhydric alcohol, and a soluble silicate.

2. Anti-foam granule according to claim 1 wherein the carrier is an aluminosilicate.

3. Anti-foam granule according to claim 1 or 2 having a surface coating of aluminosilicate dust.

4. Anti-foam granule according to claim 2 or claim 3, wherein the aluminosilicate is a zeolite.

5. Anti-foam granule according to any preceding claim, wherein the fatty acid component of the ester is unsaturated.

6. Anti-foam granule according to claim 5, wherein the fatty acid component is a $C_{10}$ to $C_{26}$ unsaturated fatty acid.

7. Anti-foam granule according to claim 6 wherein the fatty acid component is oleic acid.

8. Anti-foam granule according to any preceding claim wherein the alcohol is a triol.

9. Anti-foam granule according to any preceding claim wherein the ester is liquid at ambient temperature and has an HLB. value of 2 to 7.

10. Anti-foam granule according to claim 9 wherein said HLB value is about 4 to 5.

**11.** Anti-foam granule according to claim 9 wherein the ester is sorbitan monooleate.

**12.** Anti-foam granule according to claim 1 wherein the carrier is zeolite A or a cellulose-based material.

**13.** Anti-foam granule according to any of claims 1 to 12 wherein the soluble silicate has a $SiO_2$:$Na_2O$ ratio of 1.5 to 2.5.

**14.** Anti-foam granule according to claim 13 wherein the soluble silicate is sodium disilicate.

**15.** Anti-foam granule according to any of claims 2 to 13 which contains from 40 to 80% by weight of the aluminosilicate.

**16.** Anti-foam granule according to claim 15, wherein the anti-foam material contains about 60% by weight of the aluminosilicate.

**17.** Anti-foam granule according to any preceding claim wherein the whole composition contains from about 3 to 18% by weight of the silicone anti-foam agent and, independently, from about 3 to 18% by weight of the fatty acid ester.

**18.** Anti-foam granule according to claim 17 wherein the whole composition contains from about 7 to 11% by weight of silicone anti-foam agent and independently about 7 to 11% by weight of the fatty acid ester.

**19.** Anti-foam granule according to any of the preceding claims containing about the same proportions by weight of the silicone anti-foam agent and the fatty acid ester.

**20.** Anti-foam granule according to claim 19 containing about 7 to 11% by weight of the silicone anti-foam agent and about 7 to 11% by weight of the fatty acid ester.

**21.** Anti-foam granule according to claim 18 or 20 containing about 10% by weight of the silicone anti-foam agent and about 10% by weight of the fatty acid ester.

**22.** Anti-foam granule according to claim 3 wherein the aluminosilicate dust is zeolite A and is present in an amount of from 3 to 16% by weight.

**23.** Anti-foam granule according to claim 22, wherein the zeolite A coating is present in an amount of about 10% by weight.

**24.** A detergent composition containing anti-foam granules according to any preceding claim.

**25.** A detergent composition according to claim 24 for use in a front loading washing machine.

**26.** A method of preparing anti-foam granules according to claim 1 for detergent compositions comprising the steps of:

   (a) mixing a fatty acid ester of a polyhydric alcohol with a silicone anti-foam agent;
   (b) mixing the mixture produced in step (a) with a carrier;
   (c) mixing the mixture produced in step (b) with a soluble silicate; and
   (d) drying the product produced in step (c).

**27.** A method of preparing anti-foam granules according to claim 26, wherein the mixing step (b) utilises a high shear mixer.

**28.** A method of preparing anti-foam granules according to claim 26 or 27, wherein the mixing step (c) uses a high shear granulator.

**29.** A method of preparing anti-foam granules according to claims 24 to 28, wherein the drying step (d) is carried out using a fluid bed dryer.

**Patentansprüche**

**1.** Anti-Schaum-Granulat, umfassend einen Träger, ein Silikon-Anti-Schaum-Mittel, einen Fettsäureester eines mehrfach hydrierten Alkohols und ein lösliches Silikat.

2. Anti-Schaum-Granulat nach Anspruch 1, wobei der Träger ein Aluminiumsilikat ist.

3. Anti-Schaum-Granulat nach Anspruch 1 oder 2 mit einer Oberflächenbeschichtung aus Aluminiumsilikatstaub.

4. Anti-Schaum-Granulat nach Anspruch 2 oder 3, wobei das Aluminiumsilikat ein Zeolith ist.

5. Anti-Schaum-Granulat nach einem beliebigen vorangehenden Anspruch, wobei die Fettsäurekomponente des Esters ungesättigt ist.

6. Anti-Schaum-Granulat nach Anspruch 5, wobei die Fettsäurekomponente eine ungesättigte $C_{10}$- bis $C_{26}$-Fettsäure ist.

7. Anti-Schaum-Granulat nach Anspruch 6, wobei die Fettsäurekomponente Ölsäure ist.

8. Anti-Schaum-Granulat nach einem beliebigen vorangehenden Anspruch, wobei der Alkohol ein Triol ist.

9. Anti-Schaum-Granulat nach einem beliebigen vorangehenden Anspruch, wobei der Ester bei Umgebungstemperatur flüssig ist und einen HLB-Wert von 2 bis 7 aufweist.

10. Anti-Schaum-Granulat nach Anspruch 9, wobei der HLB-Wert etwa 4 bis 5 beträgt.

11. Anti-Schaum-Granulat nach Anspruch 9, wobei der Ester Sorbitan-Monooleat ist.

12. Anti-Schaum-Granulat nach Anspruch 1, wobei der Träger ein Zeolith A oder ein auf Zellulose basierendes Material ist.

13. Anti-Schaum-Granulat nach einem der Ansprüche 1 bis 12, wobei das lösliche Silikat ein $SiO_2$:$Na_2O$-Verhältnis von 1,5 bis 2,5 aufweist.

14. Anti-Schaum-Granulat nach Anspruch 13, wobei das lösliche Silikat Natriumdisilikat ist.

15. Anti-Schaum-Granulat nach einem der Ansprüche 2 bis 13, welches 40 bis 80 Gewichtsprozent des Aluminiumsilikats enthält.

16. Anti-Schaum-Granulat nach Anspruch 15, wobei das Anti-Schaum-Material etwa 60 Gewichtsprozent des Aluminiumsilikats enthält.

17. Anti-Schaum-Granulat nach einem beliebigen vorangehenden Anspruch, wobei die Gesamtzusammensetzung etwa 3 bis 18 Gewichtsprozent des Silikon-Anti-Schaum-Mittels und unabhängig etwa 3 bis 18 Gewichtsprozent des Fettsäureesters enthält.

18. Anti-Schaum-Granulat nach Anspruch 17, wobei die Gesamtzusammensetzung etwa 7 bis 11 Gewichtsprozent Silikon-Anti-Schaum-Mittel und unabhängig etwa 7 bis 11 Gewichtsprozent des Fettsäureesters enthält.

19. Anti-Schaum-Granulat nach einem der vorangehenden Ansprüche, welches etwa die gleichen Gewichtsanteile des Silikon-Anti-Schaum-Mittels und des Fettsäureesters enthält.

20. Anti-Schaum-Granulat nach Anspruch 19, welches etwa 7 bis 11 Gewichtsprozent des Silikon-Anti-Schaum-Mittels und etwa 7 bis 11 Gewichtsprozent des Fettsäureesters enthält.

21. Anti-Schaum-Granulat nach Anspruch 18 oder 20, welches etwa 10 Gewichtsprozent des Silikon-Anti-Schaum-Mittels und etwa 10 Gewichtsprozent des Fettsäureesters enthält.

22. Anti-Schaum-Granulat nach Anspruch 3, wobei der Aluminiumsilikatstaub Zeolith A ist und in einer Menge von 3 bis 16 Gewichtsprozent vorliegt.

**23.** Anti-Schaum-Granulat nach Anspruch 22, wobei die Zeolith-A-Beschichtung in einer Menge von etwa 10 Gewichtsprozent vorliegt.

**24.** Waschmittelzusammensetzung, welche ein Anti-Schaum-Granulat nach einem beliebigen vorangehenden Anspruch enthält.

**25.** Waschmittelzusammensetzung nach Anspruch 24 zur Verwendung einer Vorderbeladungs-Waschmaschine.

**26.** Verfahren zum Herstellen von Anti-Schaum-Körnern nach Anspruch 1 für Waschmittelzusammensetzungen, umfassend die Schritte:

(a) Mischen eines Fettsäureesters eines mehrfach hydrierten Alkohols mit einem Silikon-Anti-Schaum-Mittel;
(b) Mischen der in Schritt (a) hergestellten Mischung mit einem Träger;
(c) Mischen der in Schritt (b) hergestellten Mischung mit einem löslichen Silikat; und
(d) Trocknen des in Schritt (c) hergestellten Produkts.

**27.** Verfahren zum Herstellen von Anti-Schaum-Körnern nach Anspruch 26, wobei der Mischschritt (b) einen Mischer mit starker Scherwirkung verwendet.

**28.** Verfahren zum Herstellen von Anti-Schaum-Körnern nach Anspruch 26 oder 27, wobei der Mischschritt (c) einen Granulator mit starker Scherwirkung verwendet.

**29.** Verfahren zum Herstellen von Anti-Schaum-Körnern nach Anspruch 24 bis 28, wobei der Trocknungsschritt (d) unter Verwendung eines Wirbelbetttrockners ausgeführt wird.

**Revendications**

**1.** Granule anti-mousse **caractérisé en ce qu'**il se compose d'un support, d'un agent à silicone anti-mousse, d'un ester d'acide gras d'un alcool polyvalent, et d'un silicate soluble.

**2.** Granule anti-mousse selon la revendication 1, **caractérisé en ce que** le support est un silicate alumineux.

**3.** Granule anti-mousse selon la revendication 1 ou 2, **caractérisé en ce qu'**il présente un revêtement de surface en poudre de silicate alumineux.

**4.** Granule anti-mousse selon la revendication 2 ou 3, **caractérisé en ce que** le silicate alumineux est une zéolite.

**5.** Granule anti-mousse selon l'une quelconque des revendications précédentes, **caractérisé en ce que** le composé d'acide gras de l'ester est insaturé.

**6.** Granule anti-mousse selon la revendication 5, **caractérisé en ce que** le composé d'acide gras est un acide gras insaturé en $C_{10}$ à $C_{26}$.

**7.** Granule anti-mousse selon la revendication 6, **caractérisé en ce que** l'acide gras est de l'acide oléique.

**8.** Granule anti-mousse selon l'une quelconque des revendications précédentes, **caractérisé en ce que** l'alcool est un triol.

**9.** Granule anti-mousse selon l'une quelconque des revendications précédentes, **caractérisé en ce que** l'ester est sous forme liquide à température ambiante et présente une valeur de HLB (équilibre hydrophile-lipophile) allant de 2 à 7.

**10.** Granule anti-mousse selon la revendication 9, **caractérisé en ce que** la valeur de HLB est d'environ 4 à 5.

**11.** Granule anti-mousse selon la revendication 9, **caractérisé en ce que** l'ester est du monooléate de sorbitanne.

**12.** Granule anti-mousse selon la revendication 1, **caractérisé en ce que** le support est une zéolite A ou une matière à base de cellulose.

13. Granule anti-mousse selon l'une quelconque des revendications 1 à 12, **caractérisé en ce que** le silicate soluble présente un rapport SiO$_2$:Na$_2$O de 1,5 à 2,5.

14. Granule anti-mousse selon la revendication 13, **caractérisé en ce que** le silicate soluble est du disilicate de sodium.

15. Granule anti-mousse selon l'une quelconque des revendications 2 à 13, **caractérisé en ce qu'**il comprend en poids de 40 à 80% de silicate alumineux.

16. Granule anti-mousse selon la revendication 15, **caractérisé en ce que** la matière anti-mousse comprend en poids environ 60% de silicate alumineux.

17. Granule anti-mousse selon l'une quelconque des revendications précédentes, **caractérisé en ce que** la composition complète comprend en poids environ de 3 à 18% de l'agent à silicone anti-mousse et indépendamment environ de 3 à 18% de l'ester d'acide gras.

18. Granule anti-mousse selon la revendication 17, **caractérisé en ce que** la composition complète comprend en poids environ de 7 à 11% d'agent à silicone anti-mousse et indépendamment environ de 7 à 11% de l'ester d'acide gras.

19. Granule anti-mousse selon l'une quelconque des revendications précédentes, **caractérisé en ce qu'**il comprend environ les mêmes proportions en poids de l'agent à silicone anti-mousse et de l'ester d'acide gras.

20. Granule anti-mousse selon la revendication 19, **caractérisé en ce qu'**il comprend en poids environ de 7 à 11% de l'agent à silicone anti-mousse et environ de 7 à 11% de l'ester d'acide gras.

21. Granule anti-mousse selon la revendication 18 ou 20, **caractérisé en ce qu'**il comprend en poids environ 10% de l'agent à silicone anti-mousse et environ de 10% de l'ester d'acide gras.

22. Granule anti-mousse selon la revendication 3, **caractérisé en ce que** la poudre de silicate alumineux est de la zéolite A et en ce qu'elle est présente selon une proportion allant de 3 à 16% en poids.

23. Granule anti-mousse selon la revendication 22, **caractérisé en ce que** le revêtement de zéolite A est présent selon une proportion d'environ 10% en poids.

24. Composition détergente contenant des granules anti-mousse selon l'une quelconque des revendications précédentes.

25. Composition détergente selon la revendication 24 pour être utilisée dans une machine à laver à chargement frontal.

26. Procédé de préparation de granules anti-mousse comprenant les étapes suivantes :

   (a) mélange d'un ester d'acide gras d'un alcool polyvalent avec un agent à silicone anti-mousse ;
   (b) mélange du produit obtenu à l'étape (a) avec un support ;
   (c) mélange du produit obtenu à l'étape (b) avec un silicate soluble ; et
   (d) séchage du produit obtenu à l'étape (c).

27. Procédé de préparation de granules anti-mousse selon la revendication 26, **caractérisé en ce que** l'étape de mélange (b) utilise une mélangeuse à cisaillement fin.

28. Procédé de préparation de granules anti-mousse selon la revendication 26 ou 27, **caractérisé en ce que** l'étape de mélange (c) utilise un granulateur à cisaillement fin.

29. Procédé de préparation de granules anti-mousse selon les revendications 24 à 28, **caractérisé en ce que** l'étape de séchage (d) est réalisée en utilisant un sécheur à lit fluidisé.

Time (mins)

Fig.1.

EP 0 823 858 B1

Fig.2.

EP 0 823 858 B1

EP 0 823 858 B1

Fig.3.

19

Fig.4.